# EUROPÄISCHE PATENTSCHRIFT

(11) **EP 1 990 186 B1**
(45) Veröffentlichungstag und Bekanntmachung des Hinweises auf die Patenterteilung: **04.06.2014**
(21) Anmeldenummer: 08101686.7
(22) Anmeldetag: 15.02.2008
(51) Int. Cl.: E04F 15/04, B44C 5/04

(54) **Digital bedruckte Korkbodenplatten**
Digitally printed cork base plates
Plaques à sol en liège imprimées numériquement

(30) Priorität: 15.02.2007 DE 102007008062
(43) Veröffentlichungstag der Anmeldung: 12.11.2008
(73) Patentinhaber: Lingg, Edwin, 7537 Müstair (CH)
(72) Erfinder: Lingg, Edwin, 7537 Müstair (CH)
(74) Vertreter: Graf Glück Kritzenberger

(56) Entgegenhaltungen:
- EP-A- 1 004 434
- EP-A- 1 454 763
- EP-A- 1 593 797
- WO-A-2005/123380
- DE-A1- 10 245 914
- DE-U1- 9 313 274
- DE-U1-202004 018 259
- FR-A- 2 873 953
- US-A- 5 372 892
- US-A1- 2005 208 255

## Beschreibung

Die vorliegende Erfindung betrifft ein Verfahren zum Herstellen von digital bedruckten Korkbodenplatten und nach diesem Verfahren hergestellte Korkbodenplatten mit Digitaldruck.

Korkbodenplatten, welche sich in der Regel durch Verkleben mit dem Untergrund und/oder Nut/Feder-Systeme zu einem Korkboden zusammensetzen lassen, haben den Vorteil, dass sie leise, warm, elastisch, hygienisch und antistatisch sind. Bevorzugt sind hierbei die sogenannten Klick-Systeme, bei denen die Platten nach dem Zusammensetzen in einer gegeneinander vorgespannten verrasteten Stellung verbleiben. Ein Problem dieser Böden besteht darin, dass aufgrund der Natur des Korks die äußere Erscheinungsform dieser Böden begrenzt ist auf die natürliche Korkoptik, oder, im Falle der Verwendung von farbigen, nicht durchsichtigen Lacken oder Versiegelungsschichten, eine unifarbene Optik in beliebiger Farbe, auch schwarz, grau oder weiß.

Die EP-A 1 004 434 zeigt ein Herstellungsverfahren für Bodenplatten bei welchem eine Kernlage mit zwei Fineerlagen verklebt wird. Auf diesem Compound werden zwei mit härtbarem Kunststoff imprägnierte Lagen angebracht. Es kann auch eine äußerste Korklage vorgesehen werden.

Die DE 20 2004 018259 U1 zeigt eine Kork/HDF/Korkfußbodenplatte, wobei die untere Korkplatte als Dämmplatte ausgebildet ist.

Die EP-A 1 593 797 betrifft das digitale Drucken auf HDF- oder Holzbodenplatten ohne die Verfahrensschritte eines der Artikel des Verfahrens zu behandeln.

Die WO 2005/123380A betrifft allgemein eine UV härtbare Oberflächenbehandlung und die digitales Drucken, jedoch nicht auf Korkbodenplatten.

Es ist daher Aufgabe der Erfindung, ein Verfahren von Korkbodenplatten zu schaffen, die auch eine andere Optik aufweisen können.

Gemäß der Erfindung wird ein Digitaldruck verwendet, wodurch die Optik einer Holz-, Stein- oder anderen Oberfläche erzielt werden kann. Es lassen sich auf diese Weise sogar Logos, Schriftzeichen etc. auf der Bodenfläche darstellen, was gerade bei Bürogebäuden und Firmenniederlassungen im Sinne einer "Corporate Identity" vorteilhaft sein kann.. Zu dem Zweck wird die hochverdichtete Korkauflage wärmebehandelt (getempert). Das Tempern wird über einen Zeitraum von mindestens 5 Stunden, vorzugsweise 10 Stunden, insbesondere 14 Stunden bei einer Temperatur von mindestens 150° C, vorzugsweise 180° C, insbesondere 200° C durchgeführt. Mit dieser speziellen Temperaturbehandlung wird vermieden, dass einzelne Korkgranulate während des Digitaldrucks bzw. während der UV-Trocknungsphase der im Digitalverfahren aufgebrachten Druckfarbe expandieren oder aufquellen. Anschließend wird durch Verkleben und Verpressen ein Verbund aus einer Dämmschicht als Trittschalldämmung, einer HDF-Trägerplatte und der hochverdichteten Korkauflage gebildet. Anschliessend wird die Oberfläche der Korkauflage geschliffen, und zwar mit einer Körnung von mindestens 200. Vorzugsweise wird eine Körnung von 220 verwendet. Nach dem Schleifen wird auf die Korkoberfläche ein Sperrgrund in Form eines Dispersionsgrundes bzw. Dispersionsfarbe auf Acrylbasis aufgebracht. Diese Dispersionsfarbe wird, vorzugsweise im Durchlaufofen, bei einer Temperatur zwischen 45° und 60° getrocknet, vorzugsweise bei einer Temperatur von 55° C. Die Dauer des Trocknungsvorganges beträgt 1 bis 5 Minuten, vorzugsweise 1,5 Minuten.

Auf den noch vorgewärmten Sperrgrund wird anschließend im Digitaldruck eine UVaushärtende aufgebrachte Druckfarbe(n) in beliebiger Optik aufgetragen. Die mit Digitaldruck aufgebrachte(n) Druckfarbe(n) ist/sind UV-aushärtend und muss/müssen nach dem Aufbringen mindestens 5 Stunden, vorzugsweise mindestens 8 Stunden abkühlen und sich stabilisieren.

Anschließend wird die Korkbodenplatte mit mindestens einer Schicht versiegelt, vorzugsweise mit 2 bis 4 Schichten. Als Versiegelung wird vorzugsweise ein Lack auf Wasserbasis verwendet, der Polyurethan als auch Acrylgruppen aufweist. Nach jedem Lackauftrag wird die Bodenplatte oder zumindest deren Oberfläche auf 50° C erhitzt und wieder abgekühlt. Die Erhitzung sollte wenigstens 40° und maximal 70° betragen. Diese Erhitzung bewirkt ein Trocknen und Aushärten der Lackschicht und eine zusätzliche Stabilisierung der Platte einerseits gegen Schüsseln und andererseits gegen nachträgliche massliche Veränderung wie z.B. Schrumpfen nach der Verlegung. Nach dem Auftragen der Versiegelungsschichten werden die Platten für mindestens 8 Stunden zum Abkühlen gelagert, um deren Stabilisierung zu ermöglichen. Anschließend werden, falls die Platten mit einem Nut/Feder-System versehen werden sollen, die Platten an ihren Kanten zur Herstellung einer Nut und Feder gefräst, was in oben beschriebener Weise eine einfache Verlegung der Platten zu einem Boden ermöglicht. Vorzugsweise wird hierfür eine Nut- und Federfräsung nach dem Klick-Verlegeprinzip vorgesehen. Für die Fräsung müssen feinere Werkzeuge verwendet werden, um ein Absplittern der Druckfarbe bzw. deren Ausfransen oder Ausreißen an den Schnittkanten zu vermeiden. Die Platten können jedoch auch ohne Nut/Feder-System oder zusätzlich zu dessen Ausbildung mit dem Untergrund zur Bildung einer größeren Bodenfläche verklebt werden.

Als Trittschalldämmung wird vorzugsweise ein Korkgegenzug verwendet, in einer Stärke von 1 bis 3 mm, vorzugsweise in einer Stärke von 1,2 mm. Die HDF-Trägerplatte hat vorzugsweise eine Stärke von 5-10 mm, insbesondere eine Stärke von 7 mm. Die Korkauflage hat vorzugsweise eine Stärke von 2-5 mm, insbesondere eine Stärke von 3 mm.

Wenigstens eine, vorzugsweise alle der Versiegelungsschichten sind vorzugsweise mit Korundpartikeln versehen, deren Maximum in der Korngrößenverteilung im Nanometerbereich liegt. Dies bewirkt eine Erhöhung der Stabilisierung und Abriebfestigkeit zum Schutze der darunter liegenden Digitaldruckschicht.

## Patentansprüche

1. Verfahren zur Herstellung von digital bedruckten Korkbodenplatten,
umfassend
- Tempern einer hochverdichteten Korkauflage bei einer Temperatur oberhalb 150°C für mindestens fünf Stunden,
- Verkleben und Verpressen einer elastischen Dämmschicht, einer HDF-Trägerplatte und der hochverdichteten Korkauflage,
- Schleifen der Korkauflagenoberfläche,
- Auftragen einer Dispersionsfarbe auf Acrylbasis als Sperrgrund, Trocknen des Sperrgrundes bei einer Temperatur von mindestens 45°C über einen Zeitraum von 1 bis 5 Minuten,
- Aufbringung einer UV-härtenden Farbe im Digitaldruckverfahren,
- Aufbringen mindestens einer Versiegelungsschicht.

2. Verfahren nach Anspruch 1,
**dadurch gekennzeichnet, dass** die Korkauflage unter Druck in einer Preßform getempert wird.

3. Verfahren nach Anspruch 1 oder 2,
**dadurch gekennzeichnet, dass** die Korkauflage 10 bis 15 Stunden bei mindestens 180°C, vorzugsweise 200°C getempert wird.

4. Verfahren nach einem der vorhergehenden Ansprüche,
**dadurch gekennzeichnet, dass** die Oberfläche der Korkauflage nach dem Tempern mit einer Körnung von 200 bis 300 geschliffen wird.

5. Verfahren nach einem der vorhergehenden Ansprüche,
**dadurch gekennzeichnet, dass** der Sperrgrund bei einer Temperatur von 50 bis 60°C getrocknet wird.

6. Verfahren nach einem der vorhergehenden Ansprüche,
**dadurch gekennzeichnet, dass** der Sperrgrund 1 bis 5 min. getrocknet wird.

7. Verfahren nach einem der vorhergehenden Ansprüche,
**dadurch gekennzeichnet, dass** die Korkbodenplatte nach jedem Auftrag einer Versiegelungsschicht auf eine Temperatur von 40 bis 60°C aufgeheizt und wieder abgekühlt werden.

8. Verfahren nach einem der vorhergehenden Ansprüche,
**dadurch gekennzeichnet, dass** die Korkbodenplatte mindestens 5 vorzugsweise 8 Stunden nach dem Aufbringen der letzten Versiegelungsschicht an ihren Kanten mit einer Nut/Feder-Fräsung versehen wird.

9. Korkbodenplatte hergestellt nach einem der vorherigen Ansprüche,
dessen Dämmschicht 1 bis 3 mm stark ist,
dessen HDF-Schicht eine Stärke von 5 bis 10 mm hat,
dessen hochverdichtete Korkauflage 2 bis 5 mm stark ist,
deren Sperrgrund aus einer Dispersionsfarbe auf Acrylbasis besteht,
mit einer UV-gehärteten Lackschicht,
und zwei bis vier Versiegelungsschichten.

10. Korkbodenplatte nach Anspruch 9,
**dadurch gekennzeichnet, dass** die Dämmschicht aus Kork mit einer Dichte von 200 bis 350 kg/m3 besteht

11. Korkbodenplatte nach Anspruch 9 oder 10, **dadurch gekennzeichnet, dass** die Korkauflage eine Dichte von 400 bis 600 kg/m³ hat.

12. Korkbodenplatte nach einem der Ansprüche 9 bis 11, **dadurch gekennzeichnet, dass** die Versiegelungsschichten aus einem Polyurethan- und Acrylgruppen aufweisenden Lack auf Wasserbäsis bestehen.

## Claims

1. Method for producing digitally printed cork floor tiles,
comprising
- tempering a highly compressed cork overlay at a temperature of over 150 °C for at least five hours,
- gluing and pressing together a resilient insulating layer, an HDF carrier plate and the highly compressed cork overlay,
- polishing the cork overlay surface,
- applying an acrylic-based emulsion paint as a sealing primer,
- drying the sealing primer at a temperature of at least 45 °C over a period of 1 to 5 minutes,
- applying a UV-curing paint by digital printing,
- applying at least one sealing layer.

2. Method according to claim 1, **characterised in that** the cork overlay is tempered under pressure in a pressing mould.

3. Method according to either claim 1 or claim 2, **characterised in that** the cork overlay is tempered for 10 to 15 hours at at least 180°C, preferably 200 °C.

4. Method according to any one of the preceding claims, **characterised in that** after tempering the surface of the cork overlay is polished to a graininess of 200 to 300.

5. Method according to any one of the preceding claims, **characterised in that** the sealing primer is dried at a temperature of 50 to 60 °C.

6. Method according to any one of the preceding claims, **characterised in that** the sealing primer is dried for 1 to 5 min.

7. Method according to any one of the preceding claims, **characterised in that** after each application of a sealing layer the cork floor tile is heated to a temperature of 40 to 60 °C and cooled down again.

8. Method according to any one of the preceding claims, **characterised in that** the cork floor tile is provided with tongue-and-groove milling at the edges thereof at least 5 hours, preferably 8 hours, after the application of the last sealing layer.

9. Cork floor tile produced in accordance with any one of the preceding claims,
of which the insulating layer is 1 to 3 mm thick,
of which the HDF layer is 5 to 10 mm thick,
of which the highly compressed cork overlay is 2 to 5 mm thick,
and of which the sealing primer consists of an acrylic-based emulsion paint, comprising a UV-cured varnish layer
and two to four sealing layers.

10. Cork floor tile according to claim 9, **characterised in that** the insulating layer consists of cork having a density of 200 to 350 kg/m3.

11. Cork floor tile according to either claim 9 or claim 10, **characterised in that** the cork overlay has a density of 400 to 600 kg/m3.

12. Cork floor tile according to any one of claims 9 to 11, **characterised in that** the sealing layers consist of a water-based varnish comprising polyurethane and acryl groups.

## Revendications

1. Procédé de fabrication de plaques de sol en liège à impression numérique, comprenant :
- le recuit d'un substrat en liège fortement compressé à une température supérieure à 150 °C pendant au moins cinq heures,
- l'encollage et compression d'une couche isolante élastique, d'une plaque de support HDF et du substrat en liège,
- le ponçage de la surface du substrat en liège,
- l'étalement d'une peinture de dispersion à base d'acrylique servant d'apprêt de scellement,
- le séchage de l'apprêt de scellement à une température d'au moins 45 °C sur une période de 1 à 5 minutes,
- l'application d'une peinture durcissable aux UV par impression numérique,
- l'application d'au moins une couche de vitrification.

2. Procédé selon la revendication 1, **caractérisé par le fait que** le substrat en liège est recuit sous pression dans un moule de pressage.

3. Procédé selon la revendication 1 ou 2, **caractérisé par le fait que** le substrat en liège est recuit pendant 10 à 15 heures à au moins 180 °C, préférentiellement 200 °C.

4. Procédé selon l'une des revendications précédentes, **caractérisé par le fait que** la surface du substrat en liège est poncée après le recuit avec un grain de 200 à 300.

5. Procédé selon l'une des revendications précédentes, **caractérisé par le fait que** l'apprêt de scellement est séché à une température de 50 à 60 °C.

6. Procédé selon l'une des revendications précédentes, **caractérisé par le fait que** l'apprêt de scellement est séché pendant 1 à 5 min.

7. Procédé selon l'une des revendications précédentes, **caractérisé par le fait que** la plaque de sol en liège est chauffée après chaque application d'une couche de vitrification à une température de 40 à 60 °C puis à nouveau refroidie.

8. Procédé selon l'une des revendications précédentes, **caractérisé par le fait que** la plaque de sol en liège est pourvue, au moins 5, préférentiellement 8 heures après l'application de la dernière couche de vitrification, d'un fraisage rainure/languette sur ses arêtes.

9. Plaque de sol en liège fabriquée selon l'une des revendications précédentes,
dont la couche d'isolation a une épaisseur de 1 à 3 mm,
dont l'épaisseur HDF a une épaisseur de 5 à 10 mm,
dont le substrat en liège fortement compressé a une épaisseur de 2 à 5 mm,
dont l'apprêt de scellement est constitué d'une peinture de dispersion à base d'acrylique,
comportant une couche de vernis durcie aux UV, et
comportant deux à quatre couches de vitrification.

10. Plaque de sol en liège selon la revendication 9, **caractérisée par le fait que** la couche isolante est constituée de liège ayant une densité de 200 à 350 kg/m³.

11. Plaque de sol en liège selon la revendication 9 ou 10, **caractérisée par le fait que** le substrat en liège a une densité de 400 à 600 kg/m³.

12. Plaque de sol en liège selon l'une des revendications 9 à 11, **caractérisée par le fait que** les couches de vitrification sont constituées d'un vernis présentant des groupes de polyuréthane et d'acrylique en phase aqueuse.
